# EUROPÄISCHE PATENTSCHRIFT

(11) **EP 3 175 523 B1**
(45) Veröffentlichungstag und Bekanntmachung des Hinweises auf die Patenterteilung: **02.05.2018**
(21) Anmeldenummer: 15736421.7
(22) Anmeldetag: 01.07.2015
(51) Int. Cl.: H02G 3/04, H02G 11/00

(54) **FÜHRUNGSEINRICHTUNG**
GUIDE DEVICE
DISPOSITIF DE GUIDAGE

(30) Priorität: 31.07.2014 DE 202014103562 U
(43) Veröffentlichungstag der Anmeldung: 07.06.2017
(73) Patentinhaber: Igus GmbH, 51147 Köln (DE)
(72) Erfinder: JAEKER, Thilo-Alexander, 53757 Sankt Augustin (DE)
(74) Vertreter: Lippert Stachow Patentanwälte Rechtsanwälte
(86) Internationale Anmeldenummer: PCT/EP2015/065000
(87) Internationale Veröffentlichungsnummer: WO 2016/015942

(56) Entgegenhaltungen:
- WO-A1-2005/071284
- DE-A1- 2 658 708
- DE-A1- 10 323 681
- DE-A1- 19 837 231

## Beschreibung

Die Erfindung betrifft eine Führungseinrichtung für eine Leitung, insbesondere für eine Energieführungskette, wobei die Leitung derart verfahrbar ist, dass ein oberer Abschnitt derselben über einen unteren Abschnitt positionierbar ist, und beide Abschnitte durch einen bogenförmigen Abschnitt miteinander verbunden sind, wobei die Führungseinrichtung zumindest in einem Bereich seitlich gegenüberliegende Führungswände zur Führung des oberen Abschnitts und/oder des unteren Abschnitts aufweist, die aus seitlich gegenüberliegenden Wandelementen bestehen, die jeweils zwei voneinander in Längsrichtung des Wandelements wegweisende Stirnseiten, eine von dem seitlich gegenüberliegenden Wandelement wegweisende Außenseite, eine zu dem seitlich gegenüberliegenden Wandelement hinweisende Innenseite, eine Oberseite und eine Unterseite aufweisen, wobei die eine Führungswand bildenden Wandelemente im Bereich ihrer stirnseitigen Enden miteinander verbunden sind, so dass sie an ihren Innenseiten eine sich über die gesamte Führungswand erstreckende durchgehende Führungsfläche bilden, wobei die Wandelemente einstückig aus Kunststoff geformt sind, im Bereich ihrer stirnseitigen Enden einstückig angeformte erste Befestigungsmittel zur form- und/oder kraftschlüssigen Festlegung an einem unmittelbar benachbarten Wandelement gegen Trennung von diesem und Verschwenkung gegenüber diesem in jeder beliebigen Richtung aufweisen.

Der vorstehend genannte obere Abschnitt der Leitung, insbesondere Energieführungskette, wird auch als Obertrum und der untere Abschnitt der Leitung als Untertrum bezeichnet.

Eine Führungseinrichtung der vorstehend genannten Art ist aus der DE 103 23 681 A1 bekannt. Wie insbesondere aus den Figuren 9 und 10 dieser Druckschrift hervorgeht, weist das Halteschienensystem zum Führen von Energieführungsketten gegenüberliegende Wandelemente auf, die im Querschnitt etwa dreieckförmig ausgebildet sind und mit ihrer etwa senkrechten Innenseite eine Führungswand für die Energieführungskette bilden. An der Stirnseite der gegenüberliegenden Wandelemente ist in Längsrichtung vorstehend ein horizontal angeordneter Zylinder bzw. ein Vorsprung mit kugelförmiger Verdickung angeordnet, während im Inneren des anderen Wandelements ein dem Zylinder entsprechender Hohlzylinder bzw. ein der kugelförmigen Verdickung entsprechender Hohlzylinder vorgesehen ist. Diese Befestigungsmittel dienen zur rastenden Verbindung aufeinander zu weisender Stirnseiten unmittelbar benachbarter Wandelemente.

Der vorliegenden Erfindung liegt die Aufgabe zugrunde, eine derartige Führungswände aufweisende Führungseinrichtung dahingehend zu verbessern, dass sie einfacher montiert werden kann, wobei die die Führungswände bildenden Wandelemente stabil miteinander verbunden werden können.

Die Aufgabe wird erfindungsgemäß durch eine Führungseinrichtung der eingangs genannten Art dadurch gelöst, dass die Wandelemente im Bereich ihrer stirnseitigen Enden zum gegenüberliegenden Wandelement hin gerichtete Stege aufweisen, die durch Zwischenschaltung eines Zwischenstegs miteinander verbindbar sind, und dass die benachbarten Stege zweier unmittelbar benachbarter Wandelemente zusammen ein Rastmittel zur Verbindung mit einem Zwischensteg bilden.

Zwecks Anpassung an die Breite einer in der Führungseinrichtung zu führenden Leitung, insbesondere einer Energieführungskette, können Zwischenstege mit unterschiedlichen Längen vorgesehen sein, die lösbar mit den an den Wandelementen angeformten Stegen verbindbar sind.

Die benachbarten Stege zweier unmittelbar benachbarter Wandelemente können, bevorzugt aneinander anliegend, zusammen ein Rastmittel zur Verbindung mit einem Zwischensteg bilden. Dadurch wird der Zusammenhalt unmittelbar benachbarter Wandelemente noch weiter erhöht.

Die ersten Befestigungsmittel zur Verbindung unmittelbar benachbarter Wandelemente können insbesondere derart ausgelegt sein, dass Abschnitte der Führungseinrichtung aus mehrere Wandelemente aufweisenden Führungswänden ohne weitere (separate) Befestigungsmittel in sich stabile Bauteile bilden, die sicher beim Transport und der Montage handhabbar und über ihre gesamte Länge hinweg freitragend sind.

Die Wandelemente können z.B. eine Länge zwischen 0,5m und 1m haben. Zwei oder drei miteinander verbundene Wandelemente, die ein stabiles Bauteil bilden, haben dann eine Länge zwischen 1m und 3m.

Die ersten Befestigungsmittel zur Verbindung benachbarter Wandelemente können weiterhin derart ausgestaltet sein, dass nur jedes zweite oder dritte Wandelement einer Führungswand der Führungseinrichtung auf einer Basis, z.B. einer Konsole bei einer Krananlage, befestigt werden muss.

In einer bevorzugten Ausführung weisen die Wandelemente einstückig an diese angeformte zweite Befestigungsmittel zur Befestigung der Wandelemente auf einer Basis oder dergleichen auf.

Insbesondere können die Wandelemente beider Führungswände identisch zueinander ausgebildet sein.

Weiterhin können die Wandelemente über ihre gesamte Höhe hinweg eine im Wesentlichen gleiche Wandstärke aufweisen.

Zum besseren Einlegen der Leitung, insbesondere der Energieführungskette, in die Führungseinrichtung sind die Wandelemente im Bereich ihrer Oberseite bevorzugt nach außen gebogen.

Zur Bildung der ersten Befestigungsmittel können die Wandelemente im Bereich eines ihrer beiden stirnseitigen Enden mindestens einen an der betreffenden Stirnseite vorstehenden Vorsprung und im Bereich des anderen stirnseitigen Endes eine mit dem Vorsprung korrespondierende Öffnung aufweisen, in die der Vorsprung eines unmittelbar benachbarten Wandelements einbringbar ist.

In einer bevorzugten Weiterbildung weisen die Wandelemente ebene Stirnseiten auf. Dabei können die Wandelemente im Bereich ihrer beiden stirnseitigen Enden an ihrer Stirnseite vorstehende Vorsprünge aufweisen, die an einem stirnseitigen Ende höhenversetzt gegenüber dem Vorsprung oder den Vorsprüngen am anderen stirnseitigen Ende so angeordnet sind, dass sie außenseitige Bereiche eines unmittelbar benachbarten Wandelements zumindest teilweise überdecken und zumindest ein Vorsprung zwischen zwei Vorsprünge ohne höhenmäßigen Zwischenraum eingreift.

Die Vorsprünge sind bevorzugt außenseitig an den Wandelementen angeordnet, so dass sie die Außenseite unmittelbar benachbarter Wandelemente zumindest teilweise überdecken.

Bei einer vorteilhaften Weiterbildung der Erfindung weisen die Wandelemente im Bereich ihrer beiden stirnseitigen Enden einstückig angeformte miteinander korrespondierende Rastmittel auf, die derart ausgebildet sind, dass sie mit dem korrespondierenden Rastmittel eines unmittelbar benachbarten Wandelements eine Rastverbindung gegen Lösen der Wandelemente von einander in deren Längsrichtung eingehen können.

In einer bevorzugten Ausführung ist das Rastmittel im Bereich eines der stirnseitigen Enden als ein an der betreffenden Stirnseite vorstehender Vorsprung mit einem Rastbereich ausgebildet und das korrespondierende Rastmittel im Bereich des anderen stirnseitigen Endes mit einer Öffnung versehen, in die der Rastbereich des Vorsprungs eines unmittelbar benachbarten Wandelementes einrastbar ist.

Der Rastbereich des Vorsprungs kann von der Außenseite des Wandelements vorstehen, wobei die mit dem Rastbereich korrespondierende Öffnung in einem von der Außenseite des Wandelements vorstehenden Teil ausgebildet ist.

In einer bevorzugten Ausbildung ist die Öffnung fensterartig in diesem Teil ausgebildet, wobei der Rastbereich mit der fensterartigen Öffnung korrespondiert.

Der Rastbereich und der die Öffnung aufweisende Teil können jeweils zur Hälfte an der betreffenden Stirnseite vorstehen. Insbesondere können der Rastbereich und der die Öffnung aufweisende Teil im verbundenen Zustand der unmittelbar benachbarten Wandelemente im Wesentlich symmetrisch bezüglich der aneinander anliegenden Stirnseiten der Wandelemente ausgebildet sein.

Die zweiten Befestigungsmittel zur Befestigung der Wandelemente auf einer Basis oder dergleichen sind bevorzugt als sich parallel zur Unterseite der Wandelemente erstreckende Befestigungslaschen ausgebildet, die gegenüber den Stirnseiten der Wandelemente vorstehen und sich bei Verbindung eines Wandelements mit einem unmittelbar benachbarten Wandelement überlappen.

Die Befestigungslaschen können sich insbesondere an der Außenseite der Wandelemente nach außen erstrecken. Alternativ kann vorgesehen sein, dass sie sich an der Innenseite der Wandelemente in Richtung auf das jeweils gegenüberliegende Wandelement erstrecken.

In den Überlappungsbereichen der Befestigungslaschen kann zur zusätzlichen Sicherung gegen Trennen der unmittelbar benachbarten Wandelemente in deren Längsrichtung eine Nut-Feder-Verbindung vorgesehen sein. Die Nut erstreckt sich vorzugsweise in einem von der betreffenden Stirnseite des Wandelements wegweisenden Endabschnitt der einen Befestigungslasche quer zur Längsrichtung des Wandelements, während die Feder sich in einem entsprechenden, an der anderen Stirnseite des Wandelements vorstehenden Endabschnitt in Querrichtung erstreckt.

Weiterhin können Führungsschienen an den Innenseiten mindestens eines Paars gegenüberliegender Wandelemente zur Abstützung des Untertrums einer in der Führungseinrichtung verfahrbaren Leitung, insbesondere einer Energieführungskette, einstückig angeformt sein.

Bei einer Anordnung der Leitung, insbesondere einer Energieführungskette, bei der das freie Ende des Untertrums einen gegenüber der Führungseinrichtung stationären Anschluss und das freie Ende des Obertrums einen gegenüber der Führungseinrichtung beweglichen Anschluss aufweist, erstrecken sich die Wandelemente mit den daran angeformten Führungsschienen für das Untertrum vom stationären Anschluss aus etwa über die maximale Länge des Untertrums beim Verfahren der Leitung. In diesem ersten Abschnitt kann sich das Obertrum zum Beispiel freitragend über dem Untertrum erstrecken oder sich nach einer bestimmten freitragenden Länge auf dem Untertrum ablegen. Bei längeren Verfahrwegen ist eine Abstützung des Obertrums außerhalb des genannten ersten Abschnitts der Führungseinrichtung, d.h. jenseits des stationären Anschlusses des Untertrums, in einem zweiten Abschnitt der Führungseinrichtung vorgesehen. Der zweite Abschnitt erstreckt sich vom stationären Anschlusspunkt etwa über die maximale Länge des Obertrums beim Verfahren der Leitung, insbesondere einer Energieführungskette.

In diesem zweiten Abschnitt kann die Führungseinrichtung Wandelemente aufweisen, an deren Innenseiten Führungsschienen für das Obertrum der Leitung, insbesondere einer Energieführungskette, einstückig angeformt sind.

Der Wandbereich dieser Wandelemente kann zwischen den ersten Befestigungsmitteln zur Verbindung unmittelbar benachbarter Wandelemente und gegebenenfalls zweiten Befestigungsmitteln zur Befestigung der Wandelemente auf einer Basis oder dergleichen unterhalb der Führungsschienen für das Obertrum durchbrochen sein.

Die einstückigen Wandelemente der genannten Abschnitte sind bevorzugt jeweils identisch ausgebildet.

Alternativ zu einstückig angeformten Führungsschienen für das Obertrum können in dem genannten zweiten Abschnitt der Führungseinrichtung die gegenüberliegenden Wandelemente an ihren Innenseiten separate Führungsschienen für das Obertrum aufweisen, die vorzugsweise in unterschiedlichen Höhen an den Wandelementen form- und/oder kraftschlüssig befestigbar sind.

Die Führungsschienen können in Form eines langgestreckten, im Querschnitt winkelförmigen Elements ausgeführt sein, wobei der eine Schenkel zur Befestigung an dem betreffenden Wandelement und der im Wesentlichen senkrecht dazu verlaufende zweite Schenkel zur Auflage des Obertrums vorgesehen sind. Der zur Befestigung dienende Schenkel kann zum Wandelement hin gerichtete Noppen im Bereich seiner Enden und vorzugsweise auch im mittleren Bereich aufweisen, die in mit den Noppen korrespondierende Öffnungen in den Wandelementen form- und/oder kraftschlüssig eingreifen.

Um eine Höhenverstellung der separaten Führungsschienen für das Obertrum an den Wandelementen zu ermöglichen, können jeweils mehrere übereinander angeordnete Öffnungen in den Wandelementen vorgesehen sein.

Derartige Wandelemente mit daran einstückig angeformten Führungsschienen für das Untertrum können zur Bildung der genannten ersten und zweiten Abschnitte der Führungseinrichtung verwendet werden, wobei nur im zweiten Abschnitt die separaten Führungsschienen für das Obertrum an den Wandelementen befestigt sind. Alle für die Führungseinrichtung verwendeten Wandelemente können bei dieser Ausführung identisch sein.

Bevorzugte Ausführungsbeispiele der vorliegenden Erfindung werden im Folgenden anhand der Zeichnung näher beschrieben.
- Figur 1a: eine perspektivische Ansicht eines aus jeweils zwei unmittelbar benachbarten Wandelementen bestehenden Abschnitts einer Führungseinrichtung,
- Figur 1b: eine Draufsicht auf den in Figur 1a dargestellten Abschnitt,
- Figur 1c: eine seitliche, auf die Außenseite des in Figur 1a dargestellten Abschnitts gerichtete Ansicht,
- Figur 1d: eine stirnseitige Ansicht des in Figur 1a dargestellten Abschnitts in Richtung des Pfeils A,
- Figur 2a: eine perspektivische, auf die Innenseite eines der in Figur 1a rechts gezeigten Wandelemente gerichtete Ansicht,
- Figur 2b: eine perspektivische, auf die Außenseite des Wandelements gerichtete Ansicht,
- Figur 2c: eine seitliche, auf die Außenseite gerichtete Ansicht des Wandelements,
- Figur 2d: eine seitliche, auf die Innenseite des Wandelements gerichtete Ansicht,
- Figur 2e: eine stirnseitige Ansicht des Wandelements in Richtung des Pfeils B in Figur 2a,
- Figur 3a: eine perspektivische, auf die Außenseite einer der in Figur 1a links gezeigten Wandelemente gerichtete Ansicht,
- Figur 3b: eine perspektivische, auf die Innenseite des Wandelements gerichtete Ansicht,
- Figur 3c: eine seitliche, auf die Außenseite des Wandelements gerichtete Ansicht,
- Figur 3d: eine seitliche, auf die Innenseite des Wandelements gerichtete Ansicht,
- Figur 3e: eine stirnseitige Ansicht des Wandelements in Richtung des Pfeils C in Figur 3a,
- Figur 4a: eine perspektivische Ansicht eines zweiten Ausführungsbeispiels für einen aus jeweils zwei Wandelementen bestehenden Abschnitt einer Führungseinrichtung,
- Figur 4b: eine Draufsicht auf den in Figur 4a dargestellten Abschnitt,
- Figur 4c: eine seitliche, auf die Außenseite des in Figur 4a dargestellten Abschnitts gerichteten Ansicht,
- Figur 4d: eine vergrößerte Ansicht des Bereichs A in Figur 4c,
- Figur 4e: eine stirnseitige Ansicht des in Figur 4a dargestellten Abschnitts in Richtung des Pfeils D,
- Figur 5a: eine perspektivische, auf die Außenseite eines der in Fig. 4a gezeigten Wandelemente gerichtete Ansicht,
- Figur 5b: eine perspektivisch, auf die Innenseite des Wandelements gerichtete Ansicht,
- Figur 5c: eine seitliche, auf die Außenseite des Wandelements gerichtete Ansicht,
- Figur 5d: eine seitliche, auf die Innenseite des Wandelements gerichtete Ansicht,
- Figur 5e: eine stirnseitige Ansicht des Wandelements in Richtung des Pfeils E in Figur 5b,
- Figur 6a: eine perspektivische, auf die Innenseite der in Figur 4a dargestellten Führungsschiene gerichtete Ansicht,
- Figur 6b: eine perspektivische, auf die Außenseite der Führungsschiene gerichtete Ansicht,
- Figur 6c: seitliche, auf die Innenseite der Führungsschiene gerichtete Ansicht,
- Figur 6d: seitliche, auf die Außenseite der Führungsschiene gerichtete Ansicht,
- Figur 6e: eine perspektivische Ansicht der Führungsschiene in Richtung des Pfeils F in Figur 6b,
- Figur 7a: eine perspektivische, auf die Außenseite einer weiteren Ausführung eines Wandelements gerichtete Ansicht,
- Figur 7b: eine perspektivische, auf die Innenseite des Wandelements gerichtete Ansicht,
- Figur 7c: eine seitliche, auf die Außenseite des Wandelements gerichtete Ansicht,
- Figur 7d: eine seitliche, auf die Innenseite des Wandelements gerichtete Ansicht und
- Figur 7e: eine stirnseitige Ansicht des Wandelements in Richtung des Pfeils G in Figur 7b.

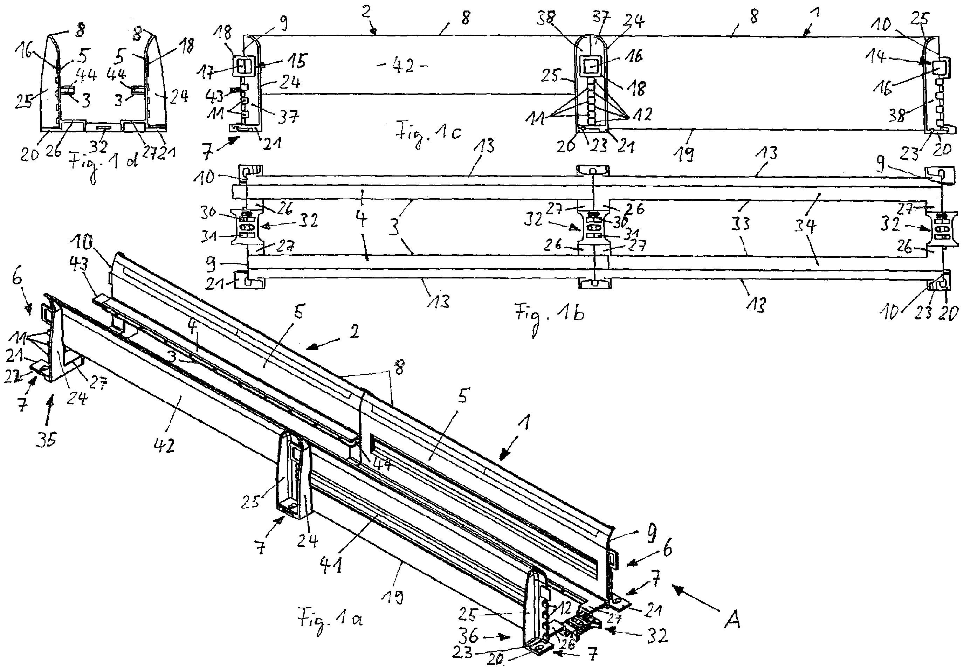

In den Figuren 1a bis 1d ist ein Abschnitt eines ersten Ausführungsbeispiels einer Führungseinrichtung gezeigt, der zwei gegenüberliegende, aus jeweils zwei Wandelementen 1, 2 bestehende Führungswände umfasst. An die in Figur 1a rechts unten gezeigten Wandelemente 1 schließen sich weitere, mit diesem identische Wandelemente 1 an und bilden einen ersten Abschnitt der Führungseinrichtung zur Ablage des Untertrums einer in der Zeichnung nicht dargestellten Energieführungskette. Ebenso schließen sich an die in Figur 1a links oben dargestellten Wandelemente 2 weitere, mit diesem identische Wandelemente 2 an, die einen zweiten Abschnitt der Führungseinrichtung zur Abstützung und Führung des Obertrums der Energieführungskette dienen. Die sich aus der Darstellung von Figur 1a ergebende Führungseinrichtung ist so ausgelegt, dass das freie Ende des Untertrums der darin zu führenden Energieführungskette einen stationären Anschluss, zum Beispiel zwischen den in Figur 1a gezeigten Wandelementen 1, und das Obertrum einen gegenüber der Führungseinrichtung beweglichen Anschluss aufweist. Beide Trume der Energieführungskette sind durch einen bogenförmigen Abschnitt miteinander verbunden, wobei sich der bogenförmige Abschnitt der Energieführungskette beim Verfahren derselben in den genannten Abschnitten der Führungseinrichtung hin- und her bewegt.

In dem genannten ersten Abschnitt kann sich das Obertrum je nach dessen Länge freitragend über dem Untertrum erstrecken oder sich nach einer bestimmten freitragenden Länge auf dem Untertrum ablegen. Erstreckt sich das Obertrum über den genannten ersten Abschnitt, in dem es gegebenenfalls durch das Untertrum abgestützt wird, in den genannten zweiten Abschnitt der Führungseinrichtung hinein, wird es dort durch an der Innenseite der Wandelemente 2 angeordnete Führungsschienen 3 abgestützt und geführt. Die Höhe der Oberseite 4 der Führungsschienen 3 entspricht zumindest annähernd der Höhe des im genannten ersten Abschnitt angeordneten Untertrums der Energieführungskette.

Die Wandelemente 1, 2 des ersten bzw. zweiten Abschnitts sind jeweils mit einander identisch und einstückig aus Kunststoff gespritzt. Wie aus Figur 1a ebenfalls hervorgeht, sind die die beiden gegenüberliegenden Führungswände der Führungseinrichtung bildenden Wandelemente 1, 2 an ihren einander zugewandten Stirnseiten derart miteinander verbunden, dass ihre Innenseiten 5 eine durchgehende sich in Längsrichtung der Wandelemente 1, 2 erstreckende Führungsfläche für das Obertrum und im genannten ersten Abschnitt für das Untertrum bilden. Das heißt, dass im Bereich ihrer einander zugewandten Stirnseiten keine Freiräume zwischen den aneinander grenzenden Innenseiten 5 der Wandelemente 1, 2 bestehen.

Die Wandelemente 1, 2 weisen im Bereich ihrer stirnseitigen Enden einstückig angeformte erste Befestigungsmittel 6 zur formschlüssigen Festlegung an einem unmittelbar benachbarten Wandelement 1, 2 gegen Trennung von diesem und Verschwenkung gegenüber diesem in jeder beliebigen Richtung auf. Die unten weiter erläuterten Befestigungsmittel sind so ausgelegt, dass Abschnitte der Führungseinrichtung aus zwei oder drei Wandelemente 1,2 aufweisenden Führungswänden ohne weitere separate Befestigungsmittel in sich stabile Bauteile bilden, die beim Transport und der Montage sicher handhabbar und über ihre gesamte Länge hinweg freitragend sind. Die im Ausführungsbeispiel verwendeten Wandelemente 1, 2 haben eine Länge von 0,5m und können im miteinander verbundenen Zustand ein stabiles zwei oder drei Wandelemente 1, 2 umfassendes Bauteil bilden.

Für ein solches Bauteil kann es ausreichend sein, nur jedes zweite bzw. dritte Wandelement 1, 2 auf einer Basis, zum Beispiel einer Konsole bei einer Krananlage, zu befestigen.

Zur Befestigung auf einer Basis, die auch aus Konsolen bestehen kann, weisen die Wandelemente 1, 2 einstückig an diese angespritzte zweite Befestigungsmittel 7 auf.

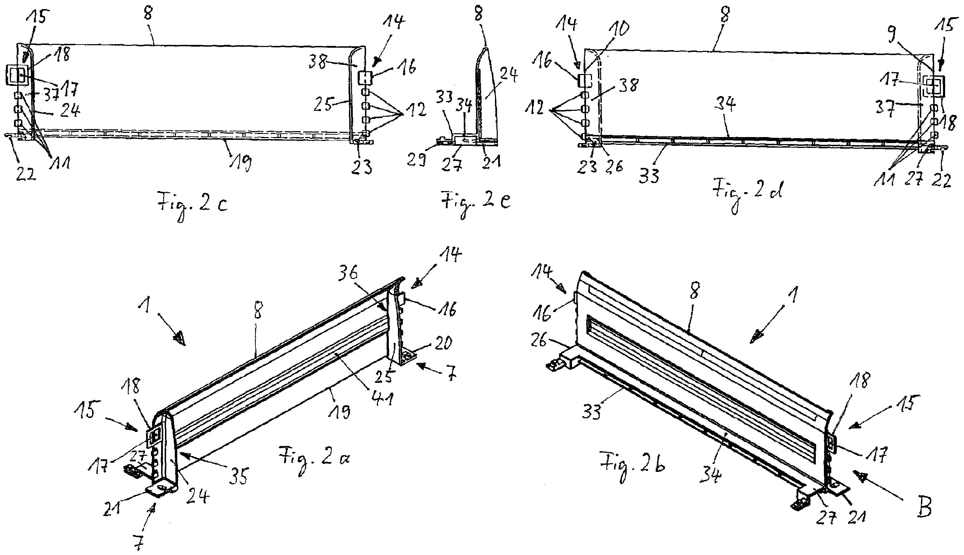

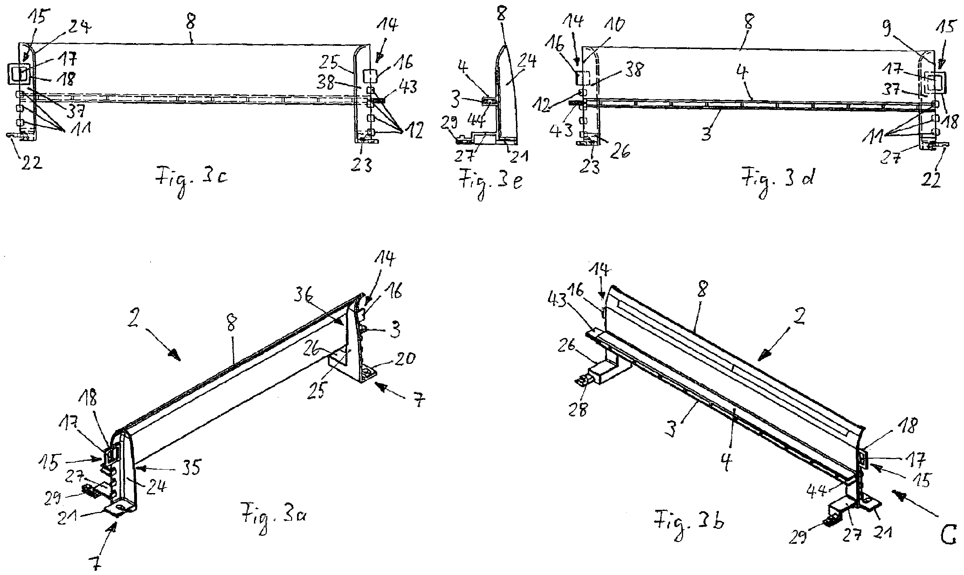

Die beiden Wandelemente 1, 2, aus denen die genannten ersten und zweiten Abschnitte der Führungseinrichtung zusammengesetzt sind, werden genauer in den Figuren 2a bis 2e bzw. 3a bis 3e dargestellt. Wie sich aus den Figuren ergibt, weisen die Wandelemente 1, 2 über ihre gesamte Höhe hinweg eine im Wesentlichen gleiche Wandstärke auf. Zum besseren Einlegen der Energieführungskette in die Führungseinrichtung sind die Wandelemente 1, 2 im Bereich ihrer Oberseite 8 nach außen gebogen.

Die Wandelemente 1, 2 weisen ebene Stirnseiten 9, 10 auf. Die ersten Befestigungsmittel 6 zur Verbindung unmittelbar benachbarter Wandelemente 1, 2 schließen Vorsprünge 11, 12 ein, die im Bereich der beiden stirnseitigen Enden der Wandelemente 1, 2 an den Stirnseiten 9, 10 und an der Außenseite 13 des Wandelements 1, 2 vorstehen. Die Vorsprünge 11 an der Stirnseite 9 sind höhenversetzt gegenüber den Vorsprüngen 12 an der Stirnseite 10 so angeordnet, dass sie, wie in Figur 1c gezeigt, die Außenseite eines unmittelbar benachbarten Wandelements 1, 2 im Bereich dessen stirnseitigen Endes überdecken und ohne Bildung eines höhenmäßigen Zwischenraums zwischen einander greifen. Beim Aneinanderfügen zweier unmittelbar benachbarter Wandelemente 1, 2 bewirken die Vorsprünge 11, 12 eine exakte höhenmäßige Ausrichtung der Wandelemente 1, 2 zueinander und sichern die Verbindung der Wandelemente 1, 2 gegen deren Lösung in einer Richtung quer zu ihrer Längsrichtung.

Die ersten Befestigungsmittel 6 zur Verbindung unmittelbarer Wandelemente 1, 2 schließen weiterhin einstückig an die Wandelemente 1, 2 angespritzte miteinander korrespondierende Rastmittel 14, 15 im Bereich der stirnseitigen Enden der Wandelemente 1, 2 ein. Das Rastmittel 14 im Bereich der Stirnseite 10 ist als ein an der betreffenden Stirnseite 10 vorstehender Vorsprung mit einem Rastbereich 16 ausgebildet. Das mit diesem Rastmittel 14 korrespondierende Rastmittel 15 im Bereich der anderen Stirnseite 9 ist mit einer fensterartigen Öffnung 17 versehen, in die der Rastbereich 16 des Vorsprungs eines unmittelbar benachbarten Wandelements 1, 2 einrastbar ist. Der Rastbereich 16 des Vorsprungs steht von der Außenseite 13 des Wandelements 1, 2 vor, wobei die mit dem Rastbereich 16 korrespondierende fensterartige Öffnung 17 in einem von der Außenseite des Wandelements 1, 2 vorstehenden Teil 18 ausgebildet ist.

Der Rastbereich 16 und der die fensterartige Öffnung 17 aufweisende Teil 18 stehen jeweils zur Hälfte an den Stirnseiten 9 bzw. 10 vor, so dass sie im verbundenen Zustand der unmittelbar benachbarten Wandelemente 1, 2 im Wesentlichen symmetrisch bezüglich der einander anliegenden Stirnseiten 9, 10 der Wandelemente 1, 2 ausgebildet sind, wie insbesondere aus Figur 1c hervorgeht.

Die zweiten Befestigungsmittel 7 zur Befestigung der Wandelemente 1, 2 auf einer Basis sind als sich parallel zur Unterseite 19 der Wandelemente 1, 2 erstreckende Befestigungslaschen 20, 21 ausgebildet. Diese stehen gegenüber den Stirnseiten 9 bzw. 10 der Wandelemente 1, 2 vor und überlappen sich bei Verbindung mit einem unmittelbar benachbarten Wandelement 1, 2, wie insbesondere aus den Figuren 1a und 1c hervorgeht. Die Befestigungslaschen erstrecken sich an der Außenseite 13 der Wandelemente 1, 2 nach außen.

In den Überlappungsbereichen der Befestigungslaschen 20, 21 ist zur zusätzlichen Sicherung gegen Trennen und Verkippen unmittelbar benachbarter Wandelemente eine Nut-Federverbindung vorgesehen. Die Nut 22 erstreckt sich in einem von der betreffenden Stirnseite 9 des Wandelements 1, 2 wegweisenden Endabschnitt der Befestigungslasche 21 quer zur Längsrichtung des Wandelements 1, 2, während sich die Feder 23 in einem entsprechenden, an der anderen Stirnseite 10 des Wandelements 1, 2 vorstehenden Endabschnitt in Querrichtung erstreckt.

Weiterhin sind im Bereich der stirnseitigen Enden der Wandelemente 1, 2 zur Oberseite 8 derselben verlaufende, einstückig an den Außenseiten 13 der Wandelemente 1, 2 angeformte Stege 24, 25 vorgesehen, die beabstandet von den Stirnseiten 9 bzw. 8 angeordnet sind und mit den Befestigungslaschen 20 bzw. 21 einen Winkel bilden.

Zur Befestigung der Wandelemente 1, 2 mit ihren gegenüberliegenden Wandelementen 1, 2 sind, den Befestigungslaschen 20, 21 gegenüberliegend, an der Innenseite 5 des Wandelements 1, 2 Stege 26, 27 angespritzt, die mit den Stegen 27 bzw. 26 des gegenüberliegenden Wandelements 1, 2 verbindbar sind. Die Stege 26, 27 sind an ihren freien Enden mit einem Rastmittel 28, 29 versehen, das mit einem Rastmittel 30 bzw. 31 eines Zwischenstegs 32 zusammenwirkt, der zwischen den Stegen 26 und 27 der gegenüberliegenden Wandelemente 1, 2 angeordnet ist. Mit Hilfe von Zwischenstegen 32 unterschiedlicher Länge kann die Breite der Führungseinrichtung, d.h. der Abstand der Innenseiten 5 der gegenüberliegenden Wandelemente 1, 2 an die Breite der zu führenden Energieführungskette angepasst werden.

Die Befestigungslaschen 20, 21 weisen Öffnungen auf, die bei Überlappen der Befestigungslaschen unmittelbar benachbarter Wandelemente 1, 2 zueinander fluchten und zur Durchführung von Befestigungsschrauben oder -bolzen dienen.

Die Stege 26, 27 liegen bei Verbindung unmittelbar benachbarter Wandelemente 1, 2, wie in Figur 1b gezeigt, aneinander an und bilden ein Stegpaar. Die Rastmittel 28, 29 des Stegpaars bilden ein Rastmittel, das mit dem gegenüberliegenden Rastmittel 30, 31 eines Zwischenstegs 32 zur Herstellung einer stabilen Befestigung zusammenwirkt.

Wie insbesondere aus den Figuren 1b, 2b und 2d hervorgeht, sind an den Innenseiten 5 der Wandelemente 1 Führungsschienen 33 zur Abstützung des Untertrums der einzulegenden Energieführungskette einstückig angespritzt. Die Führungsschienen erstrecken sich zwischen den Stegen 26 und 27 und besitzen mit diesen eine durchgehende Oberseite 34 auf gleichem Niveau.

Die stirnseitigen Endbereiche der Wandelemente 1, 2, die die ersten Befestigungsmittel 6 zur form- und/oder kraftschlüssigen Festlegung an einem unmittelbar benachbarten Wandelement 1, 2 einschließen, werden im Folgenden als Befestigungsbereiche 35, 36 bezeichnet. Sie können die zweiten Befestigungsmittel 7 zur Befestigung des Wandelements 1, 2 auf einer Basis mit einschließen. In den betrachteten Ausführungsbeispielen schließen sich die von den Stegen 24 und 25 zu den Stirnseiten 9 bzw. 10 erstreckenden Wandbereiche 37, 38 und die an deren Unterseite einstückig angespritzten Befestigungslaschen 20 bzw. 21 mit ein.

Die Wandbereiche 39 und 40 der Wandelemente 1 erstrecken sich im Wesentlichen über die gesamte Höhe der Befestigungsbereiche 35 und 36, da sie sowohl das Untertrum als auch das Obertrum der einzulegenden Energieführungskette seitlich führen. Zwischen diesen Führungsbereichen und den Befestigungsbereichen 35 und 36 weisen die Wandelemente 1 nach außen gewölbte Ausbuchtungen 41 zur Erhöhung der Stabilität der Wandelemente 1 gegen in Querrichtung wirkenden Kräften auf die Führungseinrichtung auf.

Wie aus den Figuren 1a, 1c und insbesondere den Figuren 3a bis 3e hervorgeht, erstrecken sich die Wandbereiche 42 der Wandelemente 2 zwischen den Befestigungsbereichen 35 und 36 zwischen der an die Innenseite 5 angespritzten Führungsschiene 3 und der auf gleichem Höhenniveau wie bei den Wandelementen 1 angeordneten Oberseite 8. Der Raum unterhalb des Wandbereichs 42 zwischen den Befestigungsbereichen 35 und 36 ist offen.

Wie insbesondere aus den Figuren 3b bis 3d hervorgeht, sind an einem stirnseitigen Ende der Führungsschiene 3 ein Vorsprung 43 und am anderen stirnseitigen Ende der Führungsschiene 3 eine mit dem Vorsprung 43 korrespondierende Nut 44 angeordnet. Beim Zusammenfügen zweier unmittelbar benachbarter Wandelemente 2 greifen der Vorsprung 43 und die Nut 44 ineinander und erhöhen dadurch zusätzlich die Stabilität der Verbindung.

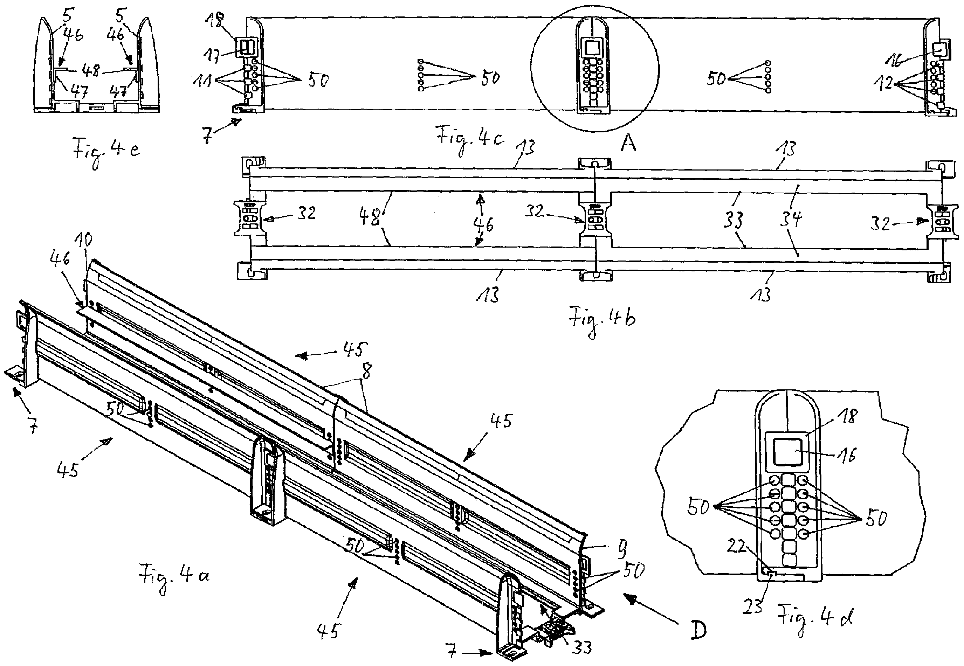

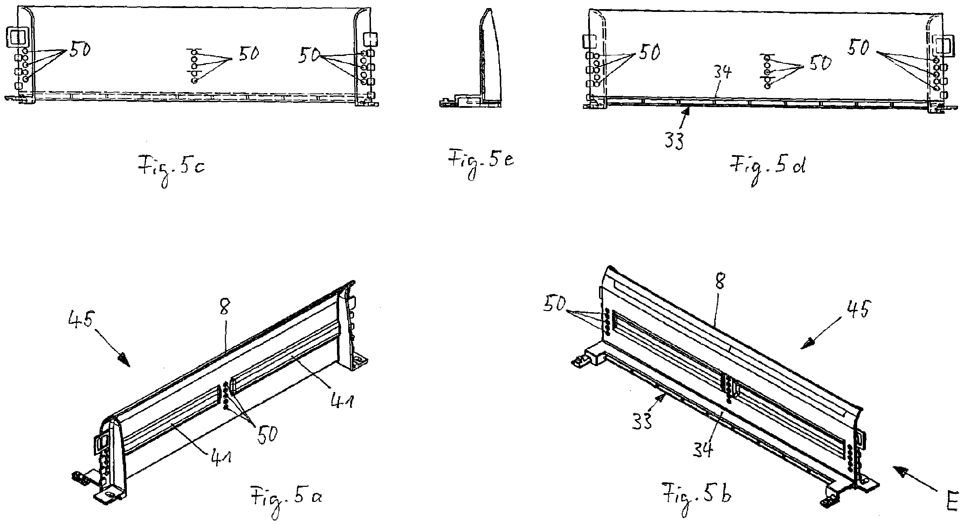

In den Figuren 4a bis 4e ist ein Abschnitt eines anderen Ausführungsbeispiels einer Führungseinrichtung dargestellt, der an gleicher Stelle wie der in den Figuren 1a bis 1d gezeigte Abschnitt in der Führungseinrichtung angeordnet ist. Lediglich die Unterschiede der bei diesem Ausführungsbeispiel verwendeten Wandelemente 45 zu den vorstehend diskutierten Wandelementen 1, 2 werden im Folgenden ausgeführt. Hinsichtlich der anderen in den Figur 4a bis 4e und 5a bis 5e gezeigten Details der Wandelemente 45 wird auf das vorstehend beschriebene erste Ausführungsbeispiel verwiesen.

Alle Wandelemente 45 des zweiten Ausführungsbeispiels einer Führungseinrichtung sind identisch ausgebildet und einstückig aus Kunststoff gespritzt. Die Wandelemente 45 entsprechen den Wandelementen 1 des ersten Ausführungsbeispiels bis auf eine Vorrichtung zur Anordnung einer separaten Führungsschiene 46 in unterschiedlichen Höhen an der Innenseite 5 des Wandelements 45.

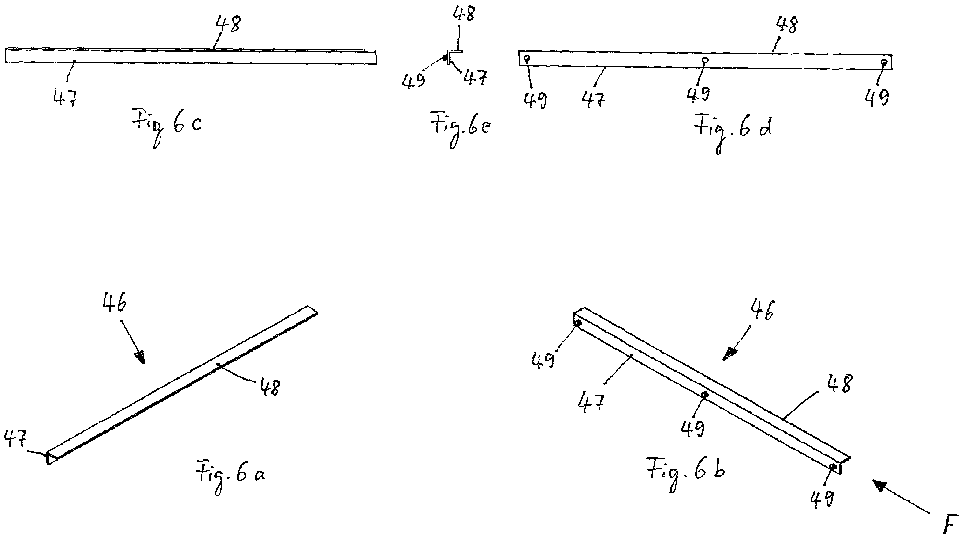

Die Führungsschienen 46 sind, wie insbesondere aus den Figuren 6a bis 6e hervorgeht, in Form eines langgestreckten, im Querschnitt winkelförmigen Elements ausgeführt, wobei der eine Schenkel 47 zur Befestigung an dem betreffenden Wandelement 45 und der im Wesentlichen senkrecht dazu verlaufende zweite Schenkel 48 zur Auflage des Obertrums vorgesehen ist. Der zur Befestigung dienende Schenkel 47 hat zum Wandelement 45 hin gerichtete Noppen 49 im Bereich seiner Enden und im mittleren Bereich, die in mit den Noppen korrespondierende Öffnungen 50 im Wandelement 45 form- und kraftschlüssig eingreifen.

Um eine Höhenverstellung der separaten Führungsschienen 46 für das Obertrum an den Wandelementen 45 zu ermöglichen, sind jeweils mehrere übereinander angeordnete Öffnungen 50 in den Wandelementen 45 vorgesehen.

Derartige Wandelemente 45, die weiterhin daran einstückig angeformte Führungsschienen 33 für das Untertrum aufweisen, werden zur Bildung der oben genannten ersten und zweiten Abschnitte der Führungseinrichtung verwendet, wobei nur im zweiten Abschnitt die separaten Führungsschienen 46 für das Obertrum an den Wandelementen 45 befestigt sind.

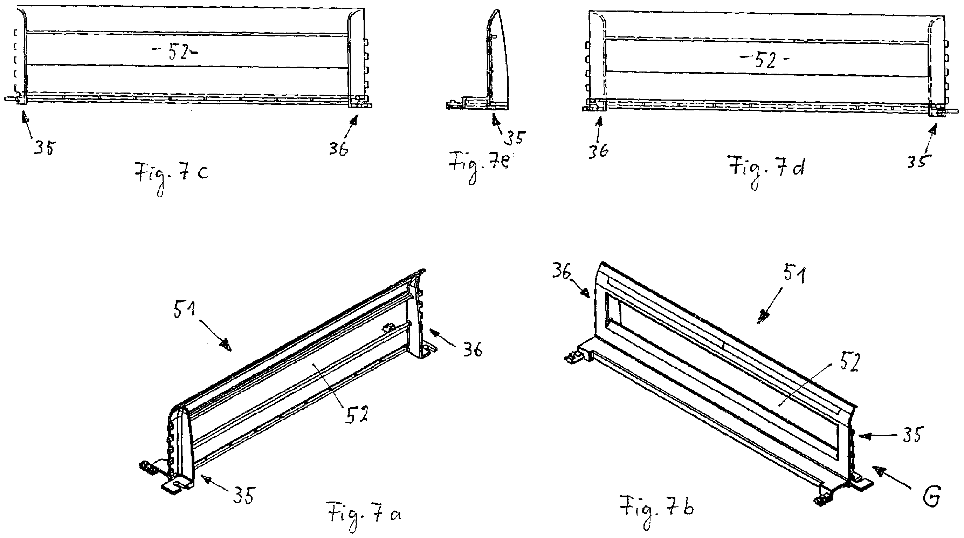

Bei einem dritten Ausführungsbeispiel einer Führungseinrichtung werden Wandelemente 51 verwendet, wie Sie in den Figuren 7a bis 7e dargestellt sind.

Der einzige Unterschied gegenüber den in den Figuren 1a bis 1b und 2a bis 2b dargestellten Wandelement 1 besteht darin, dass der Wandbereich zwischen den Befestigungsbereichen 35 und 36 eine fensterartige Öffnung 52 aufweist. Diese erstreckt sich in ihrer Höhe mit einem gewissen Abstand von der einstückig daran angespritzten Führungsschiene 33, der zur seitlichen Führung des Untertrums ausreichend ist, bis etwa zu dem nach außen gebogenen Bereich an der Oberseite des Wandelements 51.

Das Wandelement 51 kann anstelle des Wandelements 1 des oben beschriebenen ersten Ausführungsbeispiels eine Führungseinrichtung zusammen mit Wandelementen 2 oder Wandelementen 45 des oben beschriebenen zweiten Ausführungsbeispiels in einer Führungseinrichtung verwendet werden. Die Wandelemente 51 können alternativ zur Bildung einer als Ablegerinne ausgebildeten Führungseinrichtung für das Untertrum verwendet werden.

### Bezugzeichenliste

- 1: Wandelement
- 2: Wandelement
- 3: Führungsschiene
- 4: Oberseite
- 5: Innenseite
- 6: erstes Befestigungsmittel
- 7: zweites Befestigungsmittel
- 8: Oberseite
- 9: Stirnseite
- 10: Stirnseite
- 11: Vorsprung
- 12: Vorsprung
- 13: Außenseite
- 14: Rastmittel
- 15: Rastmittel
- 16: Rastbereich
- 17: Öffnung
- 18: Teil
- 19: Unterseite
- 20: Befestigungslasche
- 21: Befestigungslasche
- 22: Nut
- 23: Feder
- 24: Steg
- 25: Steg
- 26: Steg
- 27: Steg
- 28: Rastmittel
- 29: Rastmittel
- 30: Rastmittel
- 31: Rastmittel
- 32: Zwischensteg
- 33: Führungschiene
- 34: Oberseite
- 35: Befestigungsbereich
- 36: Befestigungsbereich
- 37: Wandbereich
- 38: Wandbereich
- 39: Wandbereich
- 40: Wandbereich
- 41: Ausbuchtung
- 42: Wandbereich
- 43: Vorsprung
- 44: Nut
- 45: Wandelement
- 46: Führungsschiene
- 47: Schenkel
- 48: Schenkel
- 49: Noppen
- 50: Öffnung
- 51: Wandelement
- 52: Öffnung

## Patentansprüche

1. Führungseinrichtung für eine Leitung, insbesondere für eine Energieführungskette, wobei die Leitung derart verfahrbar ist, dass ein oberer Abschnitt derselben über einen unteren Abschnitt positionierbar ist, und beide Abschnitte durch einen bogenförmigen Abschnitt miteinander verbunden sind, wobei die Führungseinrichtung zumindest in einem Bereich seitlich gegenüberliegende Führungswände zur Führung des oberen Abschnitts und/oder des unteren Abschnitts aufweist, die aus seitlich gegenüberliegenden Wandelementen (1, 2, 45, 51) bestehen, die jeweils zwei voneinander in Längsrichtung des Wandelements (1, 2, 45, 51) wegweisende Stirnseiten (9,10), eine von dem seitlich gegenüberliegenden Wandelement (1, 2, 45, 51) wegweisende Außenseite (13), eine zu dem seitlich gegenüberliegenden Wandelement (1, 2, 45, 51) hinweisende Innenseite (5), eine Oberseite (8) und eine Unterseite (19) aufweisen, wobei die eine Führungswand bildenden Wandelemente (1, 2, 45, 51) im Bereich ihrer stirnseitigen Enden miteinander verbunden sind, so dass sie an ihren Innenseiten (5) eine sich über die gesamte Führungswand erstreckende durchgehende Führungsfläche bilden, wobei die Wandelemente (1, 2, 45, 51) einstückig aus Kunststoff geformt sind, im Bereich ihrer stirnseitigen Enden einstückig angeformte erste Befestigungsmittel (6) zur form- und/oder kraftschlüssigen Festlegung an einem unmittelbar benachbarten Wandelement (1, 2, 45, 51) gegen Trennung von diesem und Verschwenkung gegenüber diesem in jeder beliebigen Richtung aufweisen, **dadurch gekennzeichnet, dass** die Wandelemente (1, 2, 45, 51) im Bereich ihrer stirnseitigen Enden zum gegenüberliegenden Wandelement (1, 2, 45, 51) hin gerichtete Stege (26, 27) aufweisen, die durch Zwischenschaltung eines Zwischenstegs (32) miteinander verbindbar sind, und dass die benachbarten Stege (26, 27) zweier unmittelbar benachbarter Wandelemente (1, 2, 45, 51) zusammen ein Rastmittel zur Verbindung mit einem Zwischensteg (32) bilden.

2. Führungseinrichtung nach Anspruch 1, **dadurch gekennzeichnet, dass** die Wandelemente (1, 2, 45, 51) einstückig an diese angeformte zweite Befestigungsmittel zur Befestigung der Wandelemente (1, 2, 45, 51 auf einer Basis oder dergleichen aufweisen.

3. Führungseinrichtung nach Anspruch 1 oder 2, **dadurch gekennzeichnet, dass** die Wandelemente beider Führungswände identisch zueinander ausgebildet sind.

4. Führungseinrichtung nach einem der Ansprüche 1 bis 3, **dadurch gekennzeichnet, dass** die Wandelemente (1, 2, 45, 51) über ihre gesamte Höhe hinweg eine im Wesentlichen gleiche Wandstärke aufweisen.

5. Führungseinrichtung nach einem der Ansprüche 1 bis 4, **dadurch gekennzeichnet, dass** die Wandelemente (1, 2, 45, 51) ebene Stirnseiten (9, 10) aufweisen.

6. Führungseinrichtung nach Anspruch 5, **dadurch gekennzeichnet, dass** die Wandelemente (1, 2, 45, 51) im Bereich ihrer stirnseitigen Enden an ihrer Stirnseite (9, 10) vorstehende Vorsprünge (11, 12) aufweisen, die an einem stirnseitigen Ende höhenversetzt gegenüber dem Vorsprung oder den Vorsprüngen (11 bzw. 12) am anderen stirnseitigen Ende so angeordnet sind, dass sie außenseitige Bereiche eines unmittelbar benachbarten Wandelements (1, 2, 45, 51) zumindest teilweise überdecken und zumindest ein Vorsprung (11) zwischen zwei Vorsprünge (12) ohne höhenmäßigen Zwischenraum eingreift.

7. Führungseinrichtung nach einem der Ansprüche 1 bis 6, **d adurch gekennzeichnet**, dass die Wandelemente (1, 2, 45, 51) im Bereich ihrer beiden stirnseitigen Enden einstückig angeformte miteinander korrespondierende Rastmittel (14, 15) aufweisen, die derart ausgebildet sind, dass sie mit dem korrespondierenden Rastmittel (15, 14) eines unmittelbar benachbarten Wandelements (1, 2, 45, 51) eine Rastverbindung gegen Lösen der Wandelemente (1, 2, 45, 51) voneinander in deren Längsrichtung bilden.

8. Führungseinrichtung nach Anspruch 7, **da-dur ch gekennzeichnet**, dass das Rastmittel (14) im Bereich eines der stirnseitigen Enden als ein an der betreffenden Stirnseite (10) vorstehender Vorsprung mit einem Rastbereich (16) ausgebildet und das korrespondierende Rastmittel (15) im Bereich des anderen stirnseitigen Endes mit einer Öffnung (17) versehen ist, in die der Rastbereich (16) des Vorsprungs eines unmittelbar benachbarten Wandelements (1, 2, 45, 51) einrastbar ist.

9. Führungseinrichtung nach Anspruch 8, **da-dur ch gekennzeichnet**, dass der Rastbereich (16) des Vorsprungs von der Außenseite (13) des Wandelements (1, 2, 45, 51) vorsteht, wobei die mit dem Rastbereich (16) korrespondierende Öffnung (17) in einem von der Außenseite (13) des Wandelements (1, 2, 45, 51) vorstehenden Teil (18) ausgebildet ist.

10. Führungseinrichtung nach einem der Ansprüche 2 bis 9, **dadurch gekennzeichnet, dass** die zweiten Befestigungsmittel (7) zur Festlegung der Wandelemente (1, 2, 45, 51) auf einer Basis oder dergleichen als sich parallel zur Unterseite (19) der Wandelemente (1, 2, 45, 51) erstreckende Befestigungslaschen (20, 21) ausgebildet sind, die gegenüber den Stirnseiten (9, 10) der Wandelemente (1, 2, 45, 51) vorstehen und sich bei Verbindung eines Wandelements (1, 2, 45, 51) mit einem unmittelbar benachbarten Wandelement (1, 2, 45, 51) überlappen.

11. Führungseinrichtung nach Anspruch 10, **dadurch gekennzeichnet, dass** die Befestigungslaschen (20, 21) sich an der Außenseite (12) der Wandelemente (1, 2, 45, 51) nach außen erstrecken.

12. Führungseinrichtung nach Anspruch 11, **dadurch gekennzeichnet, dass** in den Überlappungsbereichen der Befestigungslaschen (10, 21) eine Nut-Feder-Verbindung vorgesehen ist.

13. Führungseinrichtung nach einem der Ansprüche 10 bis 12, **dadurch gekennzeichnet, dass** im Bereich der stirnseitigen Enden der Wandelemente (1, 2, 45, 51) zur Oberseite (8) derselben verlaufende, einstückig an den Außenseiten (13) der Wandelemente (1, 2, 45, 51) angeformte Stege (24, 25) vorgesehen sind, die beabstandet von den Stirnseiten (9, 10) angeordnet sind und mit den Befestigungslaschen (20, 21) einen Winkel bilden.

14. Führungseinrichtung nach einem der Ansprüche 1 bis 13, **dadurch gekennzeichnet, dass** an den Innenseiten (5) mindestens eines Paars gegenüberliegender Wandelemente Führungsschienen (33) zur Abstützung des Untertrums einer in der Führungseinrichtung verfahrbaren Leitung, insbesondere einer Energieführungskette, einstückig angeformt sind.

15. Führungseinrichtung nach einem der Ansprüche 1 bis 14, **dadurch gekennzeichnet, dass** an den Innenseiten (5) mindestens eines Paars gegenüberliegender Wandelemente (1, 2, 45, 51) Führungsschienen (33) zur Abstützung des Obertrums einer in der Führungseinrichtung verfahrbaren Leitung, insbesondere einer Energieführungskette einstückig angeformt sind.

## Claims

1. A guide device for a line, in particular for an energy guiding chain, wherein the line is displaceable in such a way that an upper portion thereof can be positioned over a lower portion, and both portions are connected together by an arcuate portion, wherein the guide device has guide walls which are disposed in laterally opposite relationship at least in one region for guiding the upper portion and/or the lower portion, which comprise laterally mutually opposite wall elements (1, 2, 45, 51) which respectively have two end faces (9, 10) facing away from each other in the longitudinal direction of the wall element (1, 2, 45, 51), an outside (13) facing away from the laterally opposite wall element (1, 2, 45, 51), an inside (5) facing towards the laterally opposite wall element (1, 2, 45, 51), a top side (8) and an underside (19), wherein the wall elements (1, 2, 45, 51) forming a guide wall are connected together in the region of their front-side ends so that at their insides (5) they form a continuous guide surface extending over the entire guide wall, wherein the wall elements (1, 2, 45, 51) are formed in one piece from plastic, and have first fixing means (6) formed in one piece thereon in the region of their front-side ends for positively locking and/or force-locking fixing to an immediately adjacent wall element (1, 2, 45, 51) against separation from same and pivotal movement with respect thereto in any direction, **characterised in that** the wall elements (1, 2, 45, 51) have limbs (26, 27) which are directed in the region of their front-side ends towards the oppositely disposed wall element (1, 2, 45, 51) and which can be connected together by the interposition of an intermediate limb (32), and that the adjacent limbs (26, 27) of two immediately adjacent wall elements (1, 2, 45, 51) together form a latching means for connection to an intermediate limb (32).

2. A guide device as set forth in claim 1 **characterised in that** the wall elements (1, 2, 45, 51) have second fixing means formed in one piece thereon for fixing the wall elements (1, 2, 45, 51) on a base or the like.

3. A guide device as set forth in claim 1 or claim 2 **characterised in that** the wall elements of both guide walls are of a mutually identical configuration.

4. A guide device as set forth in one of claims 1 through 3 **characterised in that** the wall elements (1, 2, 45, 51) are of a substantially identical wall thickness over their entire height.

5. A guide device as set forth in one of claims 1 through 4 **characterised in that** the wall elements (1, 2, 45, 51) have flat end faces (9, 10).

6. A guide device as set forth in claim 5 **characterised in that** in the region of their front-side ends at their end face (9, 10) the wall elements (1, 2, 45, 51) have projecting projections (11, 12) which at a front-side end are arranged in height-displaced relationship with respect to the projection or the projections (11 or 12) at the other front-side end in such a way that they at least partially cover outside regions of an immediately adjacent wall element (1, 2, 45, 51) and at least one projection (11) engages between two projections (12) without an intermediate space in respect of height.

7. A guide device as set forth in one of claims 1 through 6 **characterised in that** the wall elements (1, 2, 45, 51) have mutually corresponding latching means (14, 15) integrally formed thereon in the region of their two front-side ends, which latching means are such that they form a latching connection to prevent release of the wall elements (1, 2, 45, 51) from each other in the longitudinal direction thereof with the corresponding latching means (15, 14) of an immediately adjacent wall element (1, 2, 45, 51).

8. A guide device as set forth in claim 10 **characterised in that** in the region of one of the firont-side ends the latching means (14) is in the form of a projection projecting at the end face (10) in question with a latching region (16) and in the region of the other front-side end the corresponding latching means (15) is provided with an opening (17) into which the latching region (16) of the projection of an immediately adjacent wall element (1, 2, 45, 51) is latchable.

9. A guide device as set forth in claim 8 **characterised in that** the latching region (16) of the projection projects from the outside (13) of the wall element (1, 2, 45, 51), wherein the opening (17) corresponding to the latching region (16) is provided in a part (18) projecting from the outside (13) of the wall element (1, 2, 45, 51).

10. A guide device as set forth in one of claims 2 through 9 **characterised in that** the second fixing means (7) for fixing the wall elements (1, 2, 45, 51) on a base or the like are in the form of fixing lugs (20, 21) which extend parallel to the underside (19) of the wall elements (1, 2, 45, 51) and which project with respect to the end faces (9, 10) of the wall elements (1, 2, 45, 51) and which overlap upon connection of a wall element (1, 2, 45, 51) to an immediately adjacent wall element (1, 2, 45, 51).

11. A guide device as set forth in claim 10 **characterised in that** the fixing lugs (20, 21) extend outwardly at the outside (12) of the wall elements (1, 2, 45, 51).

12. A guide device as set forth in claim 11 **characterised in that** a tongue-and-groove connection is provided in the overlap regions of the fixing lugs (20, 21).

13. A guide device as set forth in one of claims 10 through 12 **characterised in that** there are provided limbs (24, 25) which extend in the region of the front-side ends of the wall elements (1, 2, 45, 51) to the top side (8) thereof and which are formed in one piece at the outsides (13) of the wall elements (1, 2, 45, 51) and which are arranged spaced from the end faces (9, 10) and form an angle with the fixing lugs (20, 21).

14. A guide device as set forth in one of claims 1 through 13 **characterised in that** guide rails (33) are formed (in one piece) at the insides (5) of at least one pair of opposite wall elements, for supporting the lower run of a line displaceable in the guide device, in particular an energy guiding chain.

15. A guide device as set forth in one of claims 1 through 14 **characterised in that** guide rails (33) are formed in one piece at the insides (5) of at least one pair of opposite wall elements (1, 2, 45, 51), for supporting the upper run of a line displaceable in the guide device, in particular an energy guiding chain.

## Revendications

1. Dispositif de guidage pour une ligne, en particulier pour une chaîne de guidage d'énergie, dans lequel la ligne peut être déplacée d'une manière telle qu'une partie supérieure de celle-ci peut être positionnée au-dessus d'une partie inférieure et que les deux parties sont interreliées par une partie courbée, dans lequel le dispositif de guidage présente, au moins dans une région, des parois de guidage latéralement opposées pour guider la partie supérieure et/ou la partie inférieure et composées des éléments de paroi (1, 2, 45, 51) latéralement opposés respectivement comportant deux faces frontales (9, 10) pointant à l'opposé l'une de l'autre dans la direction longitudinale de l'élément de paroi (1, 2, 45, 51), une face extérieure (13) pointant à l'opposé de l'élément de paroi (1, 2, 45, 31) latéralement opposé, une face intérieure (5) pointant vers l'élément de paroi (1, 2, 45, 51) latéralement opposé, une face supérieure (8) et une face inférieure (18), dans lequel les éléments de paroi (1, 2, 45, 31) formant une paroi de guidage sont interreliés dans la zone de ses extrémités frontales d'une manière à former, à ses faces intérieures (5), une surface de guidage continue s'étendant sur toute la paroi de guidage, dans lequel les éléments de paroi (1, 2, 45, 51) sont moulés d'une seule pièce en plastique et comportent, dans la zone de ses extrémités frontales, des premiers moyens de fixation (6) formés d'un seul tenant sur ces extrémités frontales, pour la fixation sur un élément de paroi (1, 2, 45, 51) immédiatement adjacent par liaison de forme et/ou de force pour éviter une séparation de celui-ci et un pivotement par rapport à celui-ci dans une direction quelconque, **caractérisé en ce que** les éléments de paroi (1, 2, 45, 51) présentent, dans la zone de ses extrémités frontales, des nervures (26, 27) qui sont orientées vers l'élément de paroi (1, 2, 45, 51) opposé et qui peuvent être reliées entre eux par intercalation d'une nervure intermédiaire (32), et que les nervures adjacentes (26, 27) de deux éléments de paroi immédiatement adjacents (1, 2, 45, 51) forment, ensemble, un moyen d'encliquetage pour la liaison avec une nervure intermédiaire (32).

2. Dispositif de guidage selon la revendication 1, **caractérisé en ce que** les éléments de paroi (1, 2, 45, 51) comportent des deuxièmes moyens de fixation formés d'un seul tenant sur lesdits éléments de paroi, pour la fixation des éléments de paroi (1, 2, 45, 51) sur une base ou similaire.

3. Dispositif de guidage selon la revendication ou 2, **caractérisé en ce que** les éléments de paroi des deux parois de guidage sont formés de manière identique les uns aux autres.

4. Dispositif de guidage selon l'une des revendications 1 à 3, **caractérisé en ce que** les éléments de paroi (1, 2, 45, 51) présentent une épaisseur de paroi sensiblement égale sur toute leur hauteur.

5. Dispositif de guidage selon l'une des revendications 1 à 4, **caractérisé en ce que** les éléments de paroi (1, 2, 45, 51) présentent des faces frontales (9, 10) planes.

6. Dispositif de guidage selon la revendication 5, **caractérisé en ce que** les éléments de paroi (1, 2, 45, 51) présentent, dans la région de ses extrémités frontales sur leur face frontale (9, 10), des protubérances saillantes (11, 12) disposées à une extrémité frontale de manière décalée en hauteur par rapport à la protubérance ou aux protubérances (11 ou 12) à l'autre extrémité frontale et de telle manière que celles-ci chevauchent des parties sur le côté extérieur d'un élément de paroi (1, 2, 45, 51) immédiatement adjacent, au moins en partie, et qu'au moins une protubérance (11) s'engage entre deux protubérances (12) sans aucune espace intermédiaire en hauteur.

7. Dispositif de guidage selon l'une des revendications 1 á 6, **caractérisé en ce que** les éléments de paroi (1, 2, 45, 51) présentent, dans la région de ses deux extrémités frontales, des moyens d'encliquetage (14, 15) correspondant les uns aux autres et formés d'un seul tenant sur lesdites extrémités frontales, moyens d'encliquetage qui sont configurés de sorte qu'ils forment, avec le moyen d'encliquetage (15, 14) correspondant d'un élément de paroi (1, 2, 45, 51) immédiatement adjacent, une liaison à encliquetage pour éviter le détachement des éléments de paroi (1, 2, 45, 51) dans leur direction longitudinale.

8. Dispositif de guidage selon la revendication 7, **caractérisé en ce que** le moyen d'encliquetage (14) est formé, dans la région de l'une des extrémités frontales, comme une protubérance saillant sur la face frontale (10) respective et comprenant une partie d'encliquetage (16), et le moyen d'encliquetage correspondant (15) est muni, dans la région de l'autre des extrémités frontales, d'un orifice (17) dans lequel la partie d'encliquetage (16) de la protubérance d'un élément de paroi (1, 2, 45, 51) immédiatement adjacent peut être encliqueté.

9. Dispositif de guidage selon la revendication 8, **caractérisé en ce que** la partie d'encliquetage (16) de la protubérance fait saillie sur la face extérieure (13) de l'élément de paroi (1, 2, 45, 51), l'orifice (17) qui correspond avec la partie d'encliquetage (16) étant formé dans une partie (18) faisant saillie sur la face extérieure (13) de l'élément de paroi (1, 2, 45, 51).

10. Dispositif de guidage selon l'une des revendications 2 à 9, **caractérisé en ce que** les deuxièmes moyens de fixation (7) destinés á la fixation des éléments de paroi (1, 2, 45, 51) sur une base ou similaire sont formés comme des pattes de fixation (20, 21) s'étendant parallèlement à la face inférieure (19) des éléments de paroi (1, 2, 45, 51), pattes qui font saillie par rapport aux faces frontales (9, 10) des éléments de paroi (1, 2, 45, 51) et se chevauchent lors de la liaison d'un élément de paroi (1, 2, 45, 51) avec un élément de paroi (1, 2, 45, 51) immédiatement adjacent.

11. Dispositif de guidage selon la revendication 10, **caractérisé en ce que** les pattes de fixation (20, 21) s'étendent vers l'extérieur sur la face extérieure (12) des éléments de paroi (1, 2, 45, 51).

12. Dispositif de guidage selon la revendication 11, **caractérisé en ce que**, dans les régions de chevauchement des pattes de fixation (10, 21), est prévue une liaison à rainure-languette.

13. Dispositif de guidage selon l'une des revendications 10 à 12, **caractérisé en ce que**, dans la région des extrémités frontales des éléments de paroi (1, 2, 45, 51), sont prévus des nervures (24, 25) s'étendant vers la face supérieure de ceux-ci et formées d'un seul tenant sur les faces extérieures (13) des éléments de paroi (1, 2, 45, 51), lesdites nervures étant espacées des faces frontales (9, 10) et formant un angle avec les pattes de fixation (20, 21).

14. Dispositif de guidage selon l'une des revendications 1 à 13, **caractérisé en ce que** des rails de guidage (33) pour supporter la partie inférieure d'une ligne déplaçable dans le dispositif de guidage, particulièrement d'une chaîne de guidage d'énergie, sont formés d'un seul tenant sur les faces intérieures (5) d'au moins une paire des éléments de parois opposés.

15. Dispositif de guidage selon l'une des revendications 1 à 14, **caractérisé en ce que** des rails de guidage (33) pour supporter la partie supérieure d'une ligne déplaçable dans le dispositif de guidage, particulièrement d'une chaîne de guidage d'énergie, sont formés d'un seul tenant sur les faces intérieures (5) d'au moins une paire des éléments de parois (1, 2, 45, 51) opposés.
